# EUROPEAN PATENT APPLICATION

(11) **EP 2 703 742 A1**
(43) Date of publication of application: **05.03.2014**
(21) Application number: 13182219.9
(22) Date of filing: 29.08.2013
(51) Int. Cl.: F24D 3/16, F24F 13/02

(54) **Method for climate controlling a building by means of a flexible radiation body**

(30) Priority: 29.08.2012 NL 2009385
(71) Applicant: Karthaus, Emiel Willem, 2565 BB Den Haag (NL); de Gier, Martinus Hubertus Wilhelmus, 3039 LJ Rotterdam (NL)
(72) Inventor: de Gier, Martinus Hubertus Wilhelmus, 3039 LJ Rotterdam (NL); Karthaus, Emiel Willem, 2565 BB Den Haag (NL)
(74) Representative: Nederlandsch Octrooibureau

(57) **Abstract**

A method for heating a building comprises the following steps:
- providing a flexible heat-exchanging body (4), such as a bag or sack, which defines an internal space (10),
- providing a heating and/or cooling device (2),
- arranging the flexible heat-exchanging body (4) in the building,
- circulating the heated air in the interior of the flexible heat-exchanging body (4) in such a way that the temperature of at least one surface (16) thereof increases or decreases,
- emitting radiation heat or refrigeration energy, respectively, to the at least one surface (16) of the flexible heat-exchanging body (4) for heating and/or cooling the building,
- circulating at least part of the air along the heating and/or cooling device (2).

## Description

The invention relates to the climate control of buildings, in particular by means of radiation. When heating or cooling a building, it is known to make use of relatively large heat-exchanging surfaces which already achieve the desired effect at a small difference in temperature. As a result of the relatively small difference in temperature between said heat-exchanging surfaces and the ambient air, it is possible to maintain comfortable circumstances even at a relatively low temperature. In many cases, it is possible to save energy compared to conventional systems which use central heating supply at a relatively high temperature, as is the case when heating by means of convectors. The continuous radiation of large surfaces thus makes sustainable climate control possible.

Although this method of heating, which is known per se, offers significant advantages with regard to comfort and savings, in practice, not all buildings are suitable for using said method. For example, it may be undesirable for constructional reasons to modify certain surfaces of the building. Furthermore, modification of large surfaces in a building may not be feasible due to the associated costs. The technical properties of surfaces may also pose a problem.

A further problem may arise if the space to be heated has a very large volume and the capacity of the radiation surface which is limited to the walls is too small. Under such circumstances, the radiation surfaces may be situated at an excessively great distance from the user position. The latter is of particular significance in tall buildings, such as monumental churches and industrial heritage, such as warehouses and factories. In other buildings, the use of liquids in the radiation surfaces may cause problems, while in multifunctional buildings it may be desirable for the radiation device to be of a temporary nature.

The aesthetic and financial drawbacks associated with the abovementioned cases, often make it impossible to use radiation as a heat source, despite the obvious advantages thereof. In practice, underfloor heating is still being used in combination with radiators in order to keep the base temperature at a more or less acceptable level. In addition thereto, in the case of occasional use in winter, it is possible to blow air which has been heated by gas or electrically into a building. It is also possible to use additional electrical radiation panels. However, this invariably leads to poor comfort as a result of draughts, and the costs are relatively high due to the fact that large quantities of fossil fuels are used. Due to the relatively high emission of CO₂, such a method of heating is not very sustainable.

In addition, it is moreover possible for heat loss to occur due to hot air escaping via gaps and slits. The occasional heating of buildings furthermore results in significant fluctuations in temperature, which may lead to damage with regard to the structural state of the building and to the quality of objects present in the building, such as works of art, monumental organs and monumental decorations or finishes. In this context, insulation which is put in place in order to reduce the heat demand is often damaging. Locally increased temperatures which are caused by radiation via burners result in condensation which is difficult to control, while blowing large amounts of hot air into a building may upset the moisture balance, resulting in drying out and damage to the building and interior.

If however, due to all these drawbacks, it is decided not to heat monumental buildings at all, this further diminishes the chances of a building being used again or put to new use. This in turn leads to a loss of value and lack of maintenance, which may eventually lead to the forced demolition of the building.

It is therefore an object of the invention to provide a method by means of which the abovementioned buildings, such as monumental industrial heritage, churches and the like, can be heated by means of radiation. It is a further object to carry out heating by means of radiation in such a manner that the integrity of the building can be maintained to a large degree. Said object is achieved by means of a method for heating a building, comprising the following steps:
- providing a flexible heat-exchanging body in the form of a bag, sack or balloon, which heat-exchanging body defines an internal space,
- providing a heating and/or cooling device,
- arranging the flexible heat-exchanging body in the building,
- circulating the air which has been treated by the heating and/or cooling device in the interior of the flexible heat-exchanging body in such a way that at least one surface thereof changes temperature,
- emitting radiation heat or refrigeration energy, respectively, to the at least one surface of the flexible heat-exchanging body for heating and/or cooling the building,
- circulating at least part of the air along the heating and/or cooling device.

With the method according to the invention, heating is achieved by circulating hot air which has optionally been moistened through the flexible body, such as a large balloon, one of the surfaces of which is heated in such a way by the hot air that it starts to function as a radiation surface. This heat may come from any desired source, but preference is given to energy which has been produced in a sustainable way, for example coming from a store for heat obtained by using the balloon for cooling. Heat which has been recovered from ventilation air or heat from the roof construction of a tall building may also be considered. To this end, the flexible heat-exchanging body may be positioned near and/or directly below a ceiling or roof of the building; however, positioning the flexible heat-exchanging body on or near a wall of the building is also possible.

However, it is not imperative that the flexible body is positioned in this manner. According to a first alternative embodiment, the flexible body may be positioned so as to be completely or partially levitating in the space. In this case, the method comprises the following steps:
- heating the air in the interior of the flexible heat-exchanging body to a temperature higher than the temperature of the air outside the flexible heat-exchanging body,
- at least partly freely levitating the flexible heat-exchanging body on account of the buoyant force thereof.

The expression "at least partly freely levitating" is understood to mean both a state in which the flexible heat-exchanging body remains at the desired position near the ceiling, wall or the like solely on account of said buoyant force thereof, and a state in which the forces with which the flexible heating body is kept in the desired position are partly provided by said buoyant force and partly by suspension forces. Such suspension forces may, for example, be provided by means of brackets, belts and the like which are attached to the flexible heating body on one side and to the ceiling, the wall and the like on the other side. Incidentally, such brackets or belts may also be present in the case of flexible heat-exchanging bodies which levitate completely freely. In this case, however, they do not aid suspension, but only serve to stabilize the flexible heat-exchanging body and thus prevent the bodies from floating away.

The flexible heat-exchanging body may also be arranged in a completely or partly levitating manner in the space in another way. In this case, the method comprises the following steps:
- providing a sealed flexible auxiliary body,
- causing said auxiliary body to cooperate with the flexible heat-exchanging body,
- filling the auxiliary body with a gas having a lower specific weight than the ambient air,
- causing the cooperating heat-exchanging body and auxiliary body to levitate at least partly freely in the building on account of the buoyant force of the auxiliary body.

According to a first possibility, the method comprises the following steps:
- positioning the heating and/or cooling device outside the flexible heat-exchanging body,
- connecting the heating and/or cooling device to the flexible heat-exchanging body via supply and discharge lines.

Alternatively, however, it is also possible to accommodate the heating and/or cooling device in the flexible heat-exchanging body.

The invention furthermore relates to a flexible heat-exchanging body for use with the method as described above, comprising a flexible casing which defines an internal space, a supply for supplying of air to the internal space of the flexible casing, a discharge for discharging air from the internal space of the flexible casing, an internal partition which divides the internal space into interconnected sub-chambers, which partition is situated between the positions of the supply and the discharge, as well as suspension means for suspending the flexible casing in a building.

The partition which is situated in the interior of the flexible casing ensures that the hot or cold air follows a predetermined track. As a result thereof, the air firstly flows past the surface of the flexible casing which is meant to serve as a radiation surface. The heat output or refrigeration output through radiation can then be as large as possible. Subsequently, the cooled or heated air which has emitted thermal energy or refrigeration energy to said radiation surface flows back via the other side of the partition.

This partition may be configured in different ways. According to a specific possibility, the partition comprises a sealed auxiliary body which cooperates with the casing and is filled with or can be filled with a gas having a specific weight which is lower than ambient air. On account of the buoyant force of the gas-filled auxiliary body, the flexible heat-exchanging body may levitate completely or partly. In this case, the auxiliary body forms a partition which divides the internal space into interconnected sub-chambers and which is situated between the positions of the supply and the discharge.

According to another possibility, the internal space of the casing comprises two sub-chambers which are separated by a membrane, one of which is connected to the supply and the other of which is connected to the discharge, which membrane is at least partly permeable to air. In this case, the auxiliary body which is situated in the casing may be connected to part of the membrane at most.

As has been mentioned above, the casing has at least one radiation surface for emitting radiation heat, which radiation surface is situated on the side of the partition and/or of the auxiliary body adjacent to the sub-chamber into which the supply opens.

The above-described flexible heat-exchanging body is connected to an external heating and/or cooling device. According to an alternative embodiment, a heating and/or cooling device which is accommodated in the flexible casing may be provided. In this case, the supply and the discharge of the heating and/or cooling device issue on either side of the partition.

The invention also relates to a building provided with a heating or cooling system obtained according to the above-described method, comprising a dwelling space, a flexible heat-exchanging body as described above which is situated in the dwelling space, a heat source or refrigeration source which is connected to the supply or the discharge of the flexible heat-exchanging body, respectively, via a supply line or a discharge line, respectively, as well as a blower for circulating air in the circuit formed by the flexible heat-exchanging body, the supply line, the discharge line and the heat source or refrigeration source, respectively. Such a circuit is preferably completely closed. At most, a closable supply and/or discharge may be present in such an embodiment in order to provide a desired amount of air to the circuit.

According to a variant, a flexible heat-exchanging body may be provided in the dwelling space of the building a heating and/or cooling device being situated in the flexible heat-exchanging body, an energy source which is connected, via a line, to the heating and/or cooling device which is situated in the flexible heat-exchanging body, as well as a blower for circulating air in the circuit formed in the interior of the flexible heat-exchanging body.

It should be noted that the flexible body with radiation surface has significant acoustic advantages compared to the often hard materials of walls and ceilings. In particular, the radiation surface may be turned away from a roof, ceiling or wall of the building in such a manner that the dwelling space can be heated by radiation in an optimum manner.

Below, the invention will be described with reference to a number of exemplary embodiments, in which:
Fig. 1 shows a first embodiment with a part of a building and a heat-exchanging body underneath a ceiling.
Fig. 2 shows a second embodiment.
Fig. 3 shows a third embodiment with a part of a building and a heat-exchanging body on a wall.
Fig. 4 shows a fourth embodiment with a heat-exchanging body and an auxiliary body.
Fig. 5 shows the horizontal cross section along V-V from Fig. 4.
Fig. 6 shows a fifth embodiment.

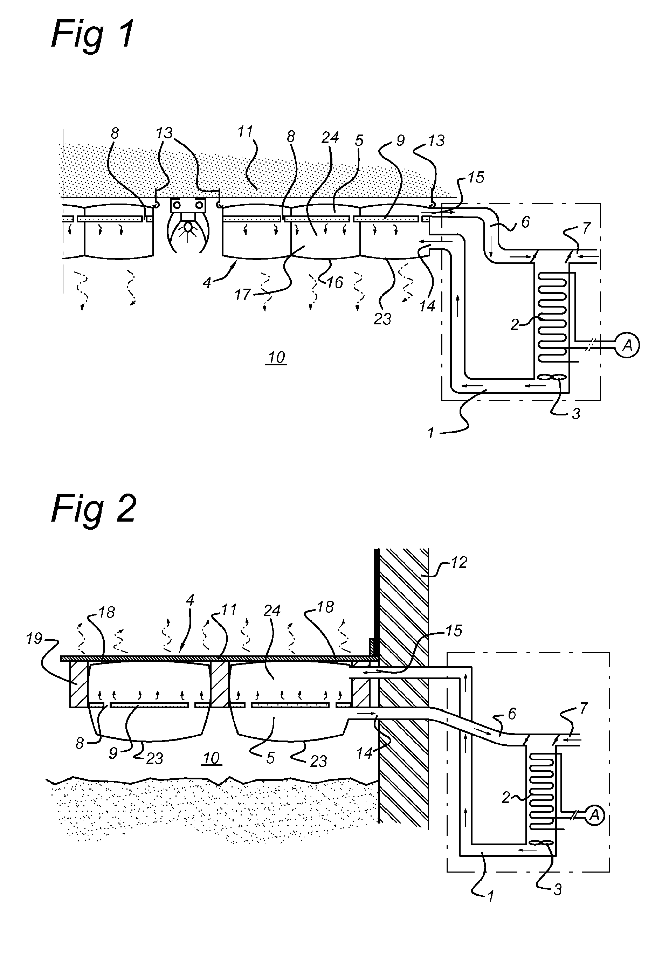

Fig. 1 shows a part of a building with an internal space 10 which is delimited by a ceiling 11. From the ceiling, a flexible heat-exchanging body or balloon-shaped body 4 is suspended by means of hooks 13. Inside the balloon-shaped body 4, a partition 9 extends and on either side thereof, sub-chambers 17, 5 are formed, into which a supply 14 and a discharge 15 open, respectively. By means of the supply line 1, air which has been heated or cooled by means of the heat-exchanging device 2 can be supplied to the balloon-shaped body via the supply 14. The air which has been treated in this way then flows through the bottom sub-chamber 17 along the downwardly directed radiation surface 16 of the balloon-shaped body 4. During heating, the heat-exchanging surface thus emits thermal radiation to the internal space 10 of the building.

Subsequently, the cooled air flows back to the discharge 15 via the upper sub-chamber 5 and to the heat exchanger 2 via the discharge line 6. The air can thus be circulated in the system consisting of the heat exchanger 2, the lines 1, 6 and the balloon-shaped body 4. This system can also be used in connection with cooling, in which case the radiation surface 16 then radiates refrigeration energy.

In the variant from Fig. 2, the balloon-shaped body is divided into balloon sections 18, each of which is accommodated in a beam layer 19. Such an embodiment is of a more permanent kind, whereas the embodiment from Fig. 1 can be fitted and removed in a simple manner by suspending the balloon-shaped body 4 from the hooks 13.

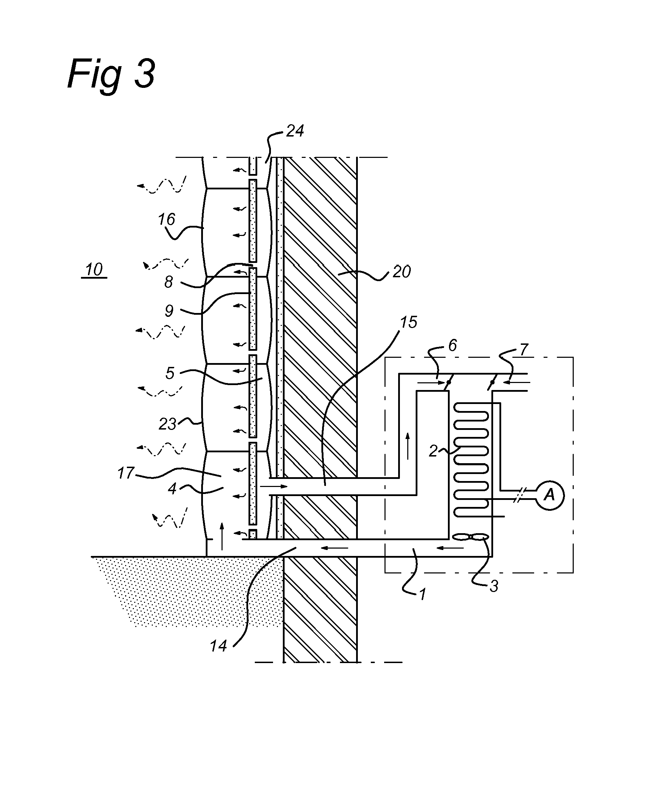

According to a further possibility, as illustrated in Fig. 3, the balloon-shaped body 4 is suspended from a wall 20 of the building. In this case, the radiation surface 16 is directed vertically towards the interior of the space 10. The sub-chamber 17 with the supply 14 is turned towards the interior of the space. Via the supply line 1, heated air is supplied to said sub-chamber. Subsequently, the air flows around the partition to the discharge 15 and to the heat exchanger 2 via the discharge line 6.

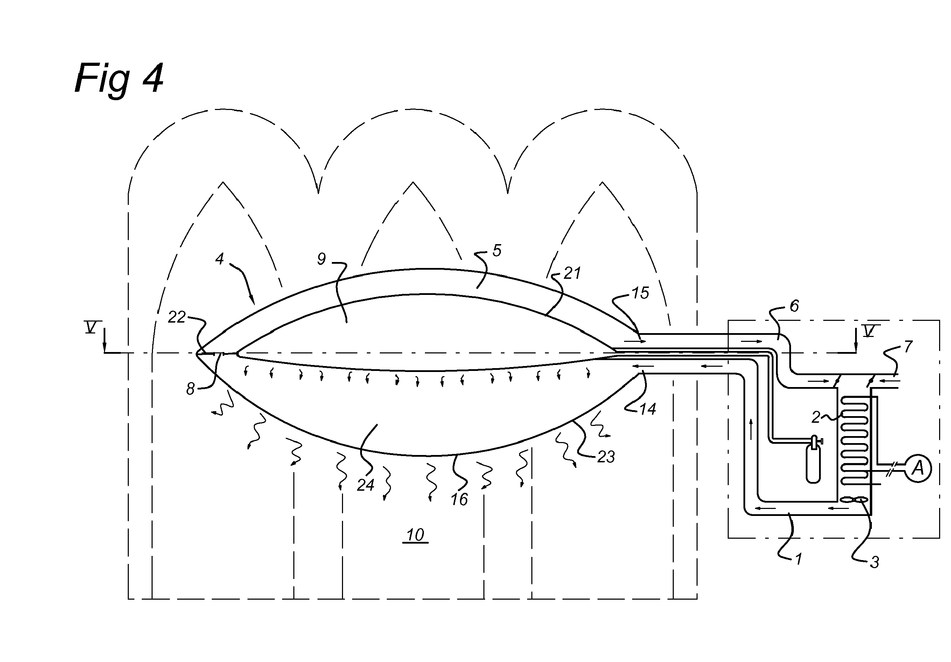

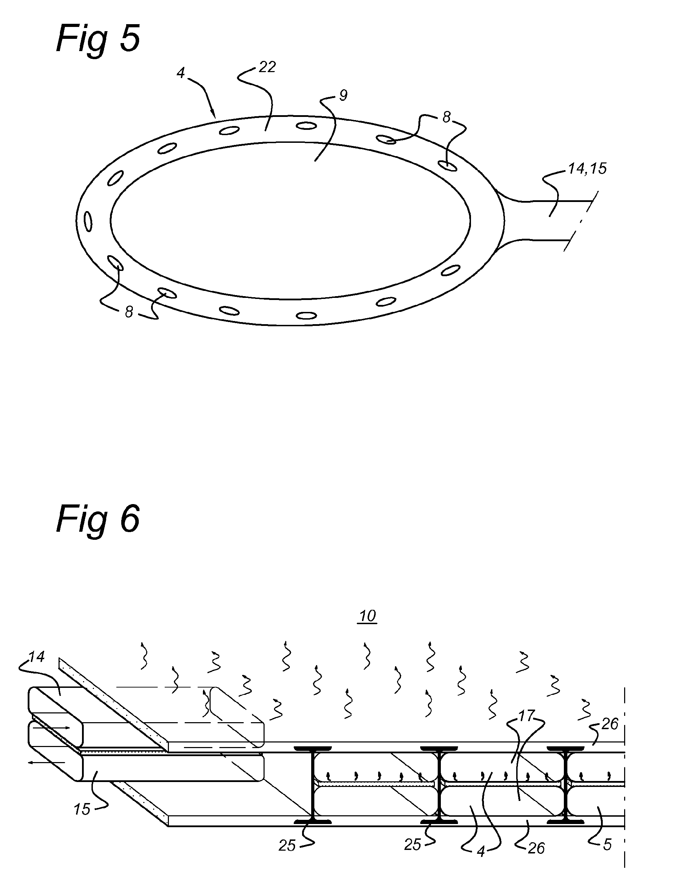

Figs. 4 and 5 show a further variant of the balloon-shaped body 4, in which the partition is configured as a flexible auxiliary body 21 which is filled with a gas which is lighter than air, such as helium. As a result thereof, the balloon-shaped body can be positioned in the space 10 in a freely levitating manner. The auxiliary body 21 is attached to the flexible heat-exchanging body 4 by means of a membrane 22. The air can circulate in the heat-exchanging body 4 via passages 8 in the membrane 22.

Fig. 6 shows a reinforced concrete floor with steel girders 25, the flanges of which are accommodated in the concrete layers 26. Between the girders 25 and concrete layers 26, open spaces are present, in which the balloon-shaped bodies 4 comprising partition 9 are accommodated. In the illustrated exemplary embodiment, the hot air is supplied to the sub-chamber 17 which is situated at the top, in such a manner that the storey situated above can be heated via its floor.

### List of reference numerals

1. Supply line
2. Heat exchanger
3. Turbine
4. Balloon-shaped body
5. Sub-chamber
6. Discharge line
7. Blower
8. Passage
9. Partition
10. Internal space of a building
11. Ceiling
12. Wall
13. Hook
14. Supply
15. Discharge
16. Radiation surface
17. Sub-chamber
18. Balloon section
19. Box
20. Wall
21. Flexible auxiliary body
22. Membrane
23. Flexible casing
24. Interior of flexible casing
25. Steel girder
26. Concrete layer

## Claims

1. Method for heating a building, comprising the following steps:
- providing a flexible heat-exchanging body (4) in the form of a bag, sack or balloon, which heat-exchanging body (4) defines an internal space (10),
- providing a heating and/or cooling device (2),
- arranging the flexible heat-exchanging body (4) in the building,
- circulating the air which has been treated by the heating and/or cooling device (2) in the interior of the flexible heat-exchanging body (4) in such a way that at least one surface (16) thereof changes temperature,
- emitting radiation heat or refrigeration energy, respectively, to the at least one surface (16) of the flexible heat-exchanging body (4) for heating and/or cooling the building,
- circulating at least part of the air along the heating and/or cooling device (2).

2. Method according to Claim 1, comprising attaching the flexible heat-exchanging body (4) to or suspending it from or near a ceiling (11) or roof of the building.

3. Method according to Claim 1 or 2, comprising the following steps:
- heating the air in the interior of the flexible heat-exchanging body to a temperature higher than the temperature of the air outside the flexible heat-exchanging body,
- at least partly freely levitating the flexible heat-exchanging body on account of the buoyant force thereof.

4. Method according to one of the preceding claims, comprising the following steps:
- providing a sealed flexible auxiliary body (21),
- causing said auxiliary body to cooperate with the flexible heat-exchanging body (4),
- filling the auxiliary body (21) with a gas having a lower specific weight than the ambient air,
- causing the cooperating heat-exchanging body (4) and auxiliary body (21) to levitate at least partly freely in the building on account of the buoyant force of the auxiliary body.

5. Method according to one of the preceding claims, comprising arranging the flexible heat-exchanging body (4) near and/or directly underneath a ceiling (11) or roof of the building, and/or near a wall (20) of the building.

6. Method according to one of the preceding claims, comprising the following steps:
- positioning the heating and/or cooling device (2) outside the flexible heat-exchanging body (4),
- connecting the heating and/or cooling device (2) to the flexible heat-exchanging body (4) via supply and discharge lines (1, 6).

7. Method according to one of the preceding claims, comprising the step of accommodating the heating and/or cooling device (2) in the flexible heat-exchanging body (4).

8. Flexible heat-exchanging body (4) for use with the method according to one of Claims 1-6, comprising a flexible casing (23) which defines an interior (24), a supply (14) for supplying hot or cold air to the interior of the flexible casing, a discharge (15) for discharging air from the interior of the flexible casing, an internal partition (9) which divides the interior into interconnected sub-chambers (5, 17), which partition is situated between the positions of the supply and the discharge, as well as suspension means (13) for suspending the flexible casing in a building.

9. Flexible heat-exchanging body (4) for use with the method according to one of Claims 1-6, comprising a flexible casing (23) which defines an interior (24), a supply (14) for supplying hot or cold air to the interior of the flexible casing, a discharge (15) for discharging air from the internal space of the flexible casing, as well as a sealed auxiliary body (21) which cooperates with the casing and is filled with or can be filled with a gas having a specific weight lower than ambient air.

10. Flexible heat-exchanging body (4) according to Claim 9, wherein the auxiliary body (21) forms a partition which divides the internal space into interconnected sub-chambers (5, 17) and which is situated between the positions of the supply (14) and the discharge (15).

11. Flexible heat-exchanging body (4) according to one of Claims 8-10, wherein the interior (24) of the casing (23) comprises two sub-chambers (5, 17) which are separated by a membrane (22), one of which is connected to the supply (14) and the other of which is connected to the discharge (15), which membrane is at least partly permeable to air.

12. Flexible heat-exchanging body (4) according to Claim 11 where dependent on Claim 9 or 10, wherein the auxiliary body (21) is situated in the casing (23) and is connected to the membrane (22).

13. Building provided with a heating system obtained according to the method according to one of Claims 1-6, comprising a dwelling space, a flexible heat-exchanging body (4) according to one of Claims 8-13 which is situated in the dwelling space, a heat source (2) or refrigeration source which is connected to the supply (14) or the discharge (15) of the flexible heat-exchanging body, respectively, via a supply line (1) or a discharge line (6), respectively, as well as a blower (7) for circulating air in the circuit formed by the flexible heat-exchanging body, the supply line, the discharge line and the heat source.

14. Building provided with a heating system obtained according to the method according to Claim 7, comprising a dwelling space, a flexible heat-exchanging body (4) according to one of Claims 14 and 15 which is situated in the dwelling space, an energy source which is connected to the heating and/or cooling device (2) in the flexible heat-exchanging body via a line, as well as a blower (7) for circulating air in the circuit formed in the interior of flexible heat-exchanging body.

15. Building according to Claim 13 or 14, wherein the circuit is a closed circuit.
